# EUROPEAN PATENT APPLICATION

(11) **EP 3 486 859 A1**
(43) Date of publication of application: **22.05.2019**
(21) Application number: 18206527.6
(22) Date of filing: 15.11.2018
(51) Int. Cl.: G06Q 30/06

(54) **METHOD FOR MANAGING A BUYING TRANSACTION OF A PRODUCT**

(30) Priority: 15.11.2017 NO 20171817
(71) Applicant: Postnord AS, 0605 Oslo (NO)
(72) Inventor: Olsen, Robin, 1536 Moss (NO)
(74) Representative: Onsagers AS

(57) **Abstract**

A method for managing a buying transaction of a product from the product is bought in an online store through transportation from vendor to a consumer comprises providing one or more search results representative of products, and a description for each product, the description comprising product related information identifying the consumer's delivery location. A relative match value is calculated for each product in the search results, taking into account at least the consumer's delivery location. The search results are sorted according to each product's relative match value.

The method further comprises receiving customer input selecting a product to buy, receiving customer input selecting a payment method for the transaction, and initiating transportation of the selected product from the vendor to the consumer's delivery location. A delivery confirmation message is received when the product is delivered to the consumer's delivery location.

## Description

The invention regards a method for managing a buying transaction of a product from the product is bought in an online store through transportation from vendor to a consumer.

Global electronic and computer networks, such as the Internet, provide access to a tremendous amount of information relating to various companies and their products. It is, however, difficult for a user to investigate a particular product offer on a global computer network when the user is not sure of the proper name of the product. Similarly, the user may not know who the manufacturer or local supplier of the product is. It can therefore be a quite time-consuming and complex procedure to do an effective product search through all of the web sites and database available that may contain pertinent information.

Therein, the C2C (Customer to Customer) management is a typical case. The so-called C2C management is to gather a great number of buyers and sellers together for on-line transaction. For example, eBay auction website and YAHOO auction website are some of the largest auction websites in the world.

With the development and popularization of the internet technology, various electronic transaction platforms for teleshopping, electronic group buying, or electronic carpooling are introduced and spread. The most popular one in the electronic transactions might be the matchmaking for users. The matchmaking means not only providing the users and the product provider with the service for group buying, but also including the searching platform of demand for products and services.

When using the electronic transaction platforms for matchmaking, a user (the provider/seller or the demander/buyer) should set the product or the service which is needed or can be provided so that the electronic transaction platforms can provide the matchmaking. Taking the group buying platform for an example, if the vendor wants to provide a service, he needs to fill out the data related to the service or the product. On the other side, the buyer needs to fill out keywords to search the product or the preference. However, having to do the filling in of data every time a product is offered or bought is inconvenient for all the users.

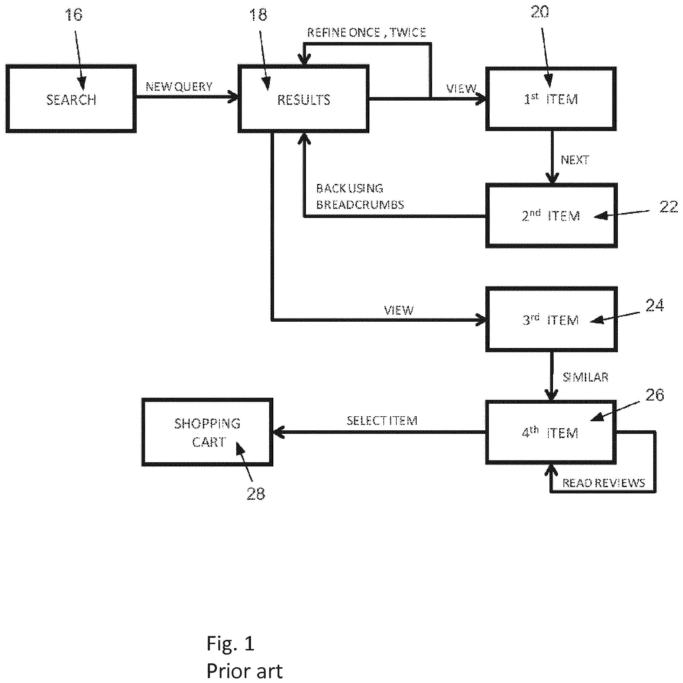

Figure 1 shows a flow chart of a conventional product search path method for on-line transaction. As shown in figure 1, the initial search 16 may provide search results 18 including a plurality of items. The user may view the first item 20, and move the next item 22 if a "next" button is provided. The user may go back to the main results page using breadcrumbs. Breadcrumbs is a navigation aid used in user interfaces which provides links back to each previous page the user navigated through to get to the current page. From the results page 18 the user may select to view the third item 24. The search interface may provide a suggestion to view a similar item 26 which the user may read its reviews and add it to the shopping cart 28.

These activities are time consuming and confusing for the average consumer. The challenge also increases when the page is being surfed using a portable device having a smaller screen such as a mobile phone, IPAD, android tablet, and the like.

In particular, conventional user interfaces do not fit neatly in a mobile browser's display. Additionally, switching screens on a mobile phone can be more confusing because the navigational context is restricted on the mobile interface.

Therefore, it is necessary to simplify the task of refining a search and to reduce switching screens in a search interface.

There is a need for an integrated system which both makes the buying process simpler for the customer and simplifies the transport of bought items from the vendor's storage to the customer's chosen delivery location.

After the user has added the selected items to the shopping cart and made the final decision to buy the items, there is a check-out process where the items are payed for up front via credit card or other online payment method, or the user may be able to select payment on delivery or to receive an invoice at a later stage. The user must also decide where the products are to be delivered or if he/she would like to pick them up at the store, or at a dedicated pick-up point. This step therefore also comprises a number of choices and input of information in order to complete the purchase.

The object of the invention is to provide method for managing a buying transaction of a product from the product is bought in an online store through transportation from vendor to a consumer which simplifies the shopping experience for both the consumer and the vendor.

The object of the invention is achieved by means of the features of the patent claims.

In the following description, the term vendor is used for the seller of a product. The seller may be the manufacturer of the product, a distributor, a or may be a shop that also sells products online. The vendor provides the product or item for sale, but are normally not responsible for the transport to the consumer. There may be a number of vendors associated to the system, where each vendor may offer the same or different products. The vendors associated to the system may therefore compete with each other within the same system.

The term consumer or customer is used for the buyer of products.

The term online shop/store or webshop is used for a form of electronic commerce which allows consumers to directly buy goods or services from a seller over the Internet using a web browser or a smartphone program/app on any computer or device, such as desktop computers, laptops, tablet computers and smartphones. Consumers find a product of interest by visiting the website of the retailer directly or by searching among alternative vendors using a shopping search engine.

In one embodiment, a method for managing a buying transaction of a product from the product is bought in an online store through transportation from vendor to a consumer, the method comprises providing one or more search results representative of products, and a description for each product, the description comprising product related information. The method further comprises identifying the consumer's delivery location and calculating a relative match value for each product in the search results, taking into account at least the consumer's delivery location. The search results are sorted according to each product's relative match value. The method further comprises receiving consumer input selecting a product to buy from the search results, receiving consumer input selecting a payment method for the transaction, initiating transportation of the selected product from the vendor to the consumer's delivery location, and receiving a delivery confirmation message when the product is delivered to the consumer's delivery location.

The consumer's delivery location is the location, ie. the address the customer which wishes to procure a product wants the products delivered. This may be the consumer's home or other address such as his/her workplace, temporary address, the address of a receiver of a gift, etc.

This may be the same location as the location from which the order of delivery is made, but may in other instances be a different location. In one embodiment, the location from which the delivery is made may be identified by means of WIFI-localization/Triangulation/GPS information, using location data from the customer's computer or smartphone, details from the byer's profile in the online shop or the market place, or information from the consumer module.

In one embodiment, the transport time from the vendor to the consumer delivery location is calculated based on the distance from the vendor's storage or any warehouse where the product is located to the consumer delivery location. The distance may be calculated using a map service. The map service may comprise information regarding average travel time for the distance, actual travel time at that specific time, accidents, etc. Also the weight and size of the product will influence on the travel time, as large and heavy products require different transportation vehicles than small and light products.

When the selection of items/products and the check-out with payment options are completed, the vendor must prepare the products for delivery to the customer. The vendor must get the selected items from their storage and organize transport to the customer's selected delivery location.

In one embodiment, the user may select a new delivery location at any time up to delivery of the product.

Online stores typically enable shoppers to use "search" features to find specific models, brands or items. Online customers must have access to the Internet and a valid method of payment in order to complete a transaction, such as a credit card, a debit card or an online payment service such as PayPal. However, also other payment methods may be selected, such as invoice, partial payment, etc. For physical products (e.g., books, clothes, electronic devices, etc.), the products are shipped to the customer.

A system as described above comprises in one embodiment a vendor module, a customer module, a market place and a sender module, which interact with each other to perform all the necessary operations of the system. Each of the modules comprise a computer system with processing and analyzing means and can perform calculations and analyses on different data. The modules are also in communication with at least one of the other modules of the system, in order to enable seamless information transfer and enabling utilization of information from the system at a whole.

The vendor module comprises means for collection of information from the vendor and performing analyses/operations on information. It comprises input means into which the vendor inputs product related information such as which products to be sold, number of products in stock, location of the products (the location of the storage for products). The vendor module further may comprise a database comprising product related information and tools for analyzing product related information, commercial information etc. Examples of tools and operations which may be performed by the vendor module are:
- Administration a design of communications to be dispatched, such as invoices, Direct Marketing messages, documents, for adapting communication to the intended recipient.
- Dispatching communications according to the receiver's preferences, for example by e-mail, sms, other messaging systems, or through social media channels.
- Preparing reports on operations, such as communications sent, communication received, communication opened by the receiver, etc.

The vendor module may in one embodiment be integrated with a dispatch module, and be adapted to receive information related to the buyers relevant for a specific buyer. Such information may for example be demographic and geographic data for the consumers specific for each vendor, popularity of each product offered from the vendor across all vendors offering the same product, etc. In other embodiments, the dispatch module is a separate module, adapted to communicate with the vendor module and/or the market place and/or the consumer module.

The market place is a module representing a digital online shop, ie. an interface and underlying computer program, including database and analyzing tools, where the products/items from all the associated vendors are advertised, the consumers can search for products and select products to buy, and where the buying transaction is carried out.

The market place comprises in one embodiment a method for calculating a match value for the products according to product related information and preferences set by the customer. The match value can for example be used to sort the search results for a product according to the customer's preferences. For example, the customer has indicated that delivery time is more important than price, and thus the search engine/processing computer of the market place will produce and show a list of products with the shortest delivery times first. As another example, the customer needs the product delivered the same day, and thus only products from a vendor and with a location which enables same day delivery is presented to the consumer.

Similarly, other customer specific information may be used as input during searches, such as payment methods offered by the vendors, etc.

In one embodiment the calculation of the relative match value for each product in the search result also takes into account price of the product.

It may also be received input from the consumer which defines a transportation time significance factor and a price significance factor. These significance factors represent the consumer's priorities and may be used to calculate the relative match value by taking into account the transportation time significance factor and the price significance factor. There may also be other product related information where the consumer or customer can select between various degrees of significance factors. Depending from the selected degrees of the significance factors the products in the search results are differently weighted and the calculations of the relative match values is altered accordingly.

The search results are sorted according to each product's relative match value.

Taking into account the delivery location, distance to delivery location and/or transportation time, means that consumers in different geographical areas can get different list of search result, even if they search for the same product with the same priorities. This provides a highly individually adapted search result for each consumer.

The market place may be connected to, or replaced with, the vendor's own online shop. In one embodiment, the vendor's online shop communicates with the consumer module, and/or the market place, and some or all of the information and functions of the consumer module is/are comprised in the vendor's online shop. The consumer module comprises customer specific information, which is input by the user and may be stored in a database in the system. The customer has access to this module through a user interface on a computer, smartphone or other suitable internet connected platform. The customer user interface may also connect the user to the market place.

The customer specific information may be name and one or more address of the customer, payment preferences, delivery preferences, etc. The consumer module may be connected to the market place and communicates with the market place, such that the information from the customer module can be used in the marked place to organize the search and streamline the complete buying process from selecting the best matched product, via choosing payment method to delivery of the product to the customer.

The payment options may in one embodiment be selected based on the standard settings in the consumer module, and may in some embodiments be adapted for the customer to be able to change method up to the product is delivered. Also delivery address may be changeable at any point of time by the consumer through the consumer module.

After finalizing the buying transaction, the product is marked for transport to the consumer. As described earlier, the consumer may have chosen a preferred delivery location, which may be his/her home address or another address.

In one embodiment a payment transaction is carried out upon reception of the delivery confirmation message, thus finalizing the buying process. Awaiting to the delivery is confirmed with carrying out the payment, enables changing the payment method at any point of time up to delivery. This means that the consumer at any point may change his/her selection of payment method, for example having initially selected payment with a VISA card, rather selecting partial payment or using a credit card.

The method may thus in one embodiment comprise checking if new customer input has been received, selecting the payment method, upon reception of the delivery confirmation message, and then carrying out a payment transaction using the selected payment method.

The invention will now be described by means of examples and with reference to the accompanying figures.
Figure 1 shows an example of prior art.
Figure 2 illustrates the basic elements of an online buying and logistics system.
Figure 3 illustrates the modules of an example of an online buying and logistics system.
Figure 4 illustrates the communication and information flow involved in the different stages of the system.
Figure 5 illustrates schematically a method for managing transportation time of a product from vendor to consumer, where a number of warehouses comprise a selection of products of a portfolio of products.
Figure 6 illustrates the interaction between the customers, vendors and an online buying and logistics system during the product browsing stage.
Figure 7 illustrates the interaction between the customers, vendors and an online buying and logistics system during the order confirmation stage.

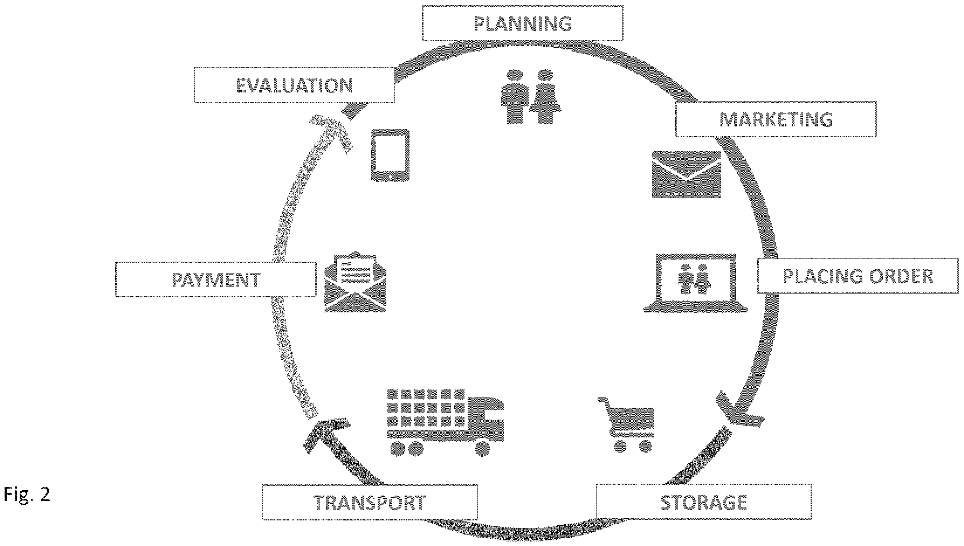

An overall system for an online buying and logistics system is schematically illustrated in figure 2. The online web shop is set up, involving planning and marketing. The customer/consumer places an order for a product to be bought, the product is fetched from the storage and transported to the consumer. The consumer pays for the product, which payment covers the costs for the product itself as well as the costs for transportation. After the transaction is complete, there may be an evaluation process both from the consumer with respect to the product and the buying process and from the vendor with respect to the transaction steps, such as the transportation time and quality.

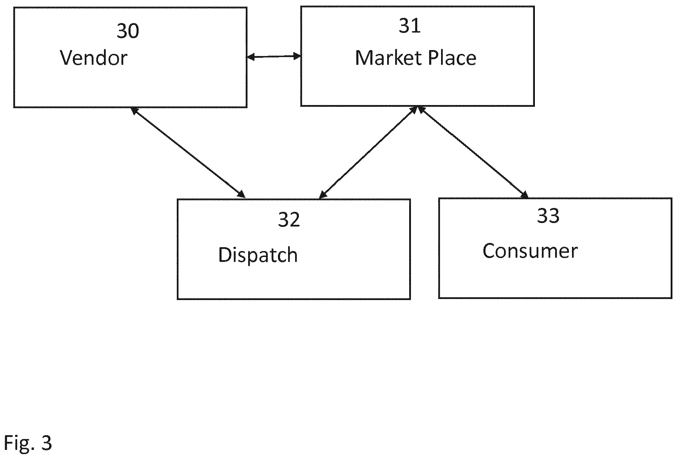

Figure 3 illustrates the communication paths between the modules of the system. The system comprises a vendor module 30, a customer module 33, a market place 31 and a dispatch module 32. The arrows show how the modules interact with each other to perform all the necessary operations of the system. Each of the modules comprise a computer system with processing and analyzing means and can perform calculations and analyses on different data. The modules are also in communication with at least one of the other modules of the system, in order to enable seamless information transfer and enabling utilization of information from the system at a whole.

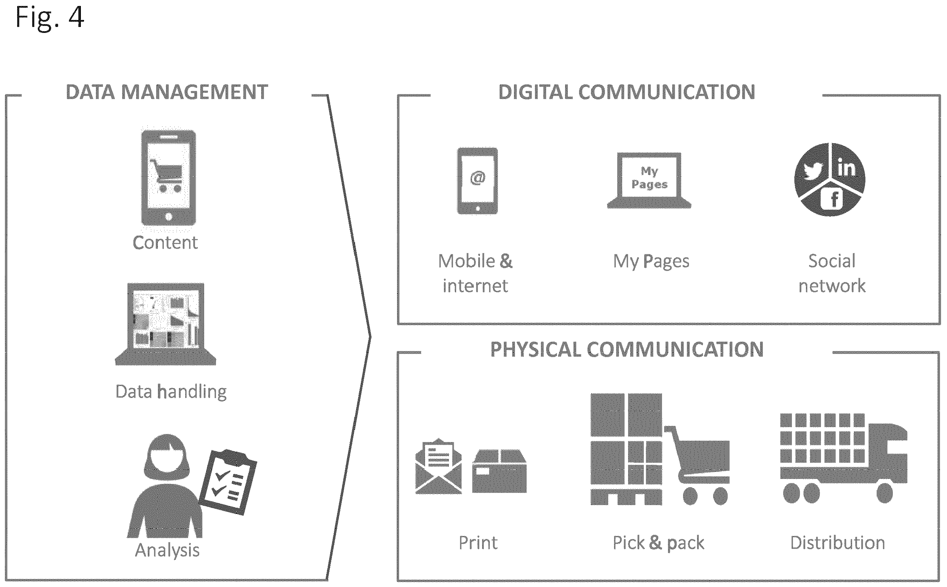

Figure 4 illustrates the communication and information flow involved in the different stages of the system. The vendor module performs analyses and handles data and content regarding the products/items that are to be sold through an online shop. This is for example which products to sell through the shop, how many items of each product is in stock, etc. From this information, the information is communicated to the consumer via internet and mobile telephone network to the user's mobile phone/smartphone or computer. Also information regarding the delivery process, may be communicated to the consumer. For example may a message be sent to the consumer when the order has been placed, when the product has been picked up from the vendor or warehouse, at different points during the transportation, when the product is to be delivered within a certain time period, etc. The communication to the consumer may be made through a consumer module, or directly from the vendor module. The consumer module may comprise preferences set by the consumer on how to receive communications, such as through an app on the smartphone, sms, e-mail, etc.

After finalizing the ordering of a product, the product is transported via physical communication from storage to the consumer.

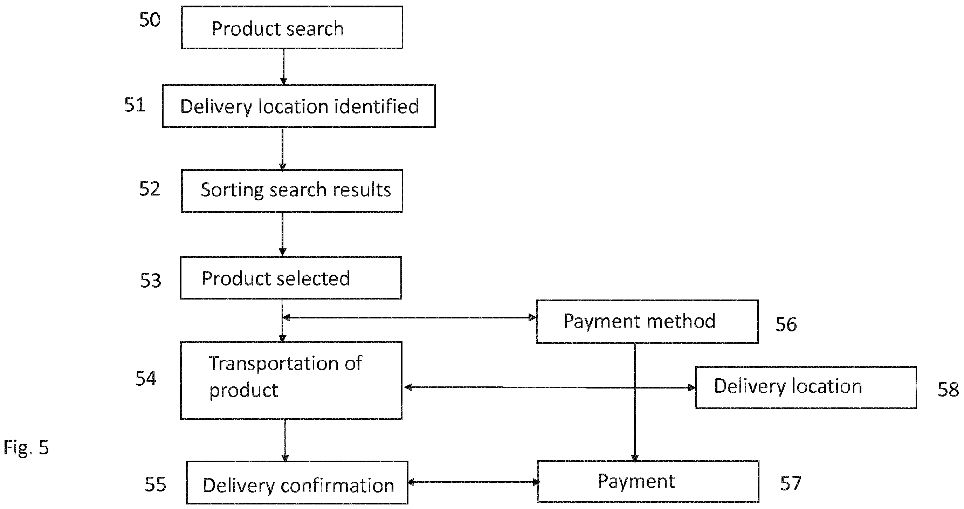

Figure 5 illustrates schematically the process of buying a product and transport the bought product from vendor to consumer.

Using a user interface and connecting to the market place or other online shop, a customer searches for a product he wants to buy. In step 50, one or more search results are provided which are representative of products. The search comprises a description for each product comprising product related information. Such product related information may for example be technical information, size and weight, as well as other information associated with the product, such as if the product is offered by one or more different vendors, the location of the product at the vendor (storage or warehouse), number of product in stock at each vendor, the vendor's response time when receiving an order, the price of the product, if there are any additional transportation costs, etc.

In step 51, the consumer's delivery location is identified. The transportation time for the product to the consumer may then be determined and may be used as input in the search for product. Based on this location, a relative match value for each product in the search result is calculated. The calculation of the relative match value for each product in the search result may as described earlier also take into account other factors, such as price of the product and the consumer's selection of a transportation time significance factor and/or a price significance.

The search results are sorted according to each product's relative match value in step 52, and the consumer/customer selects a product to buy in step 53.

At this stage, information is received from the consumer, or from previously input information from the consumer, for example in the consumer module, selecting a payment method 56 for the transaction.

The transportation of the selected product from the vendor to the consumer's delivery location is then initiated in step 54. Before and during the transportation, it should also be checked if the consumer has changed the delivery location. This is illustrated in step 58. If the delivery location initially was the consumers default address stored in the database in the consumer module or the vendor's webshop, the consumer may change the delivery location upon receiving a message indicating delivery time, change of private plans, etc. If the delivery location is changed, the transportation will change in order to deliver the product at the correct location.

When the transportation has brought the product to the selected delivery location, a delivery confirmation message is received in step 55.

Upon reception of the delivery confirmation message, a payment transaction is carried out in step 55. However, it is possible that the consumer has changes his/her mind with respect to selected payment method, so before carrying out the payment transaction, it should be checked if new customer input has been received selecting another payment method upon reception of the delivery confirmation message, and then carrying out a payment transaction using the selected payment method.

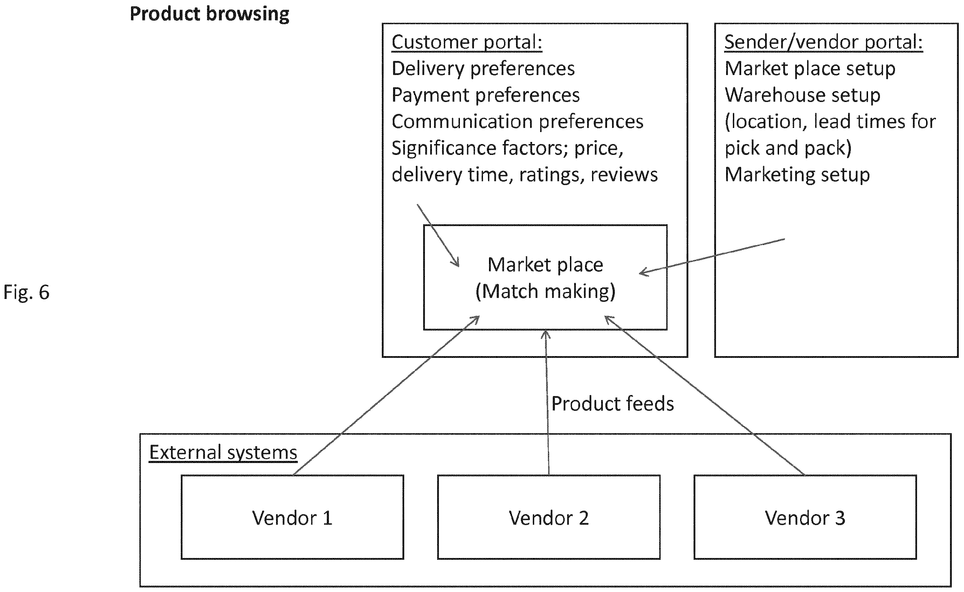

Figure 6 illustrates the interaction between the customers, vendors and an online buying and logistics system during the product browsing stage, for example stage 50 in figure 5.

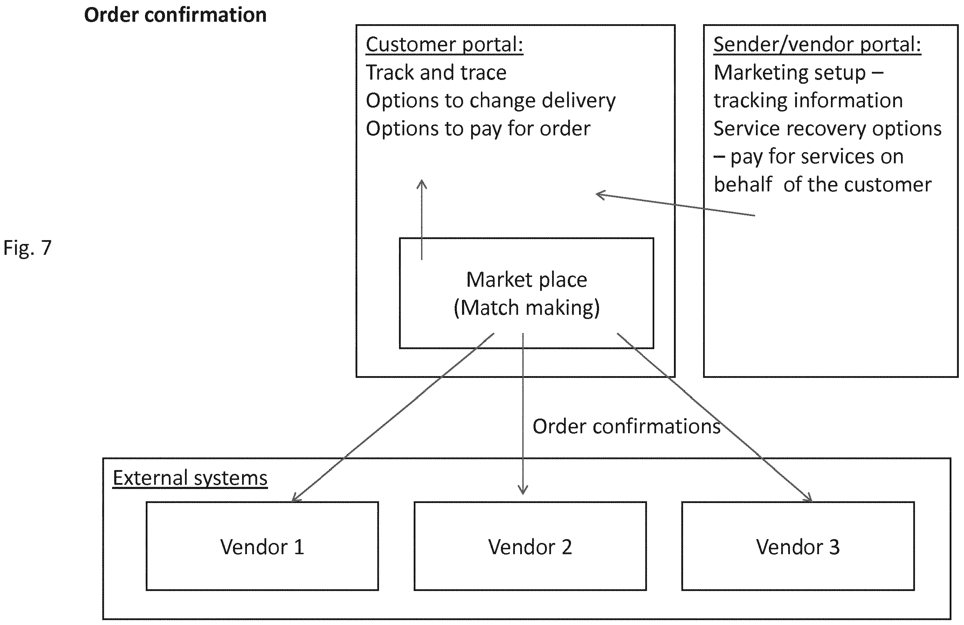

Figure 7 illustrates the interaction between the customers, vendors and an online buying and logistics system during the order confirmation stage.

Product browsing is the stage during online shopping where the consumer searches for the products to buy. The consumer can access a large number of online stores, ie. vendors, see products from multiple vendors in a simple and transparent way, discover new products and suppliers, and finally collect good deals / products from multiple vendors in one order with one payment transaction and one shipping charge. The products can be found by the consumer through category filters, store listings, product searches, other filtering (such as price, manufacturer, stock status, delivery time) and preferences. Consumer preferences are set up and stored in "Customer Portal". The portal defines the consumer's preferred delivery methods, delivery addresses / place, payment methods, communication channels, product categories, price sensitivity, importance of delivery time, etc., and this information is used during the product browsing to help consumers find relevant offers and products. All tracking and information related to an order made in the customer portal will be presented to the consumer in the same portal / module, and all changes are also made in the same interface, thus making the experience smooth for the customer.

In the "Sender portal" vendors define how their 'shop', ie. online shop, should look like, which products are available in express warehouses (pick the same day), stock of the warehouses, lead times for picking and packing of their stock, marketing setup (digital banners, ie marketing or information to recipients, in-shipping messages / shipping information), customer surveys, DM broadcasts, and more. For example, a supplier will be able to see inventory status at an express warehouse in the city Trondheim, where he has chosen to have a number of promotional products for fast delivery. If sales in Trondheim proves to be lower than expected, and the actor wants to get rid of the merchandise, they can easily click to the "DM" in the "sender portal," making the exclusion of the targeted audience for that particular item, designing a physical or digital advertisement - and send it digitally or to print and distribution, through a few keystrokes. In addition, the portal enables a complete overview of statistics, reports, analyzes and will be able to manage broadcasts on behalf of itself or on behalf of consumers - for example, change the delivery location or extend the collection deadlines as a service (service recovery) if the consumer contacts the supplier.

The products displayed to the customer are made available through a product feed (for example an API solution) from the supplier's external systems. In other words, products, product information, inventory and the like are managed in the same place as they manage their own online store, and the system will dynamically retrieve updated information from the supplier's own systems. Orders placed in Shopping will be added.

Orders placed by the customer in the system will be placed directly into the supplier's system and will thus be perceived as a regular order from their own online store.

The Market place is where all "matchmaking" takes place. By combining the consumer's profile (preferences) and / or position (GPS, triangulation, etc.), the supplier's setup and product feeds, the products that best match the criteria from multiple channels are presented at a single place with a pre-scheduled delivery time per vendor . The consumer has full payment options (VISA / MasterCard, invoice, delayed payment, etc.) and delivery method / place (home delivery, retrieved from the store), from the order is added to the system and until the consumer has received the product. The consumer can in addition choose to return the item at any time before it is received. After the customer has received the product, the right of cancellation applies in the usual way.

## Claims

1. Method for managing a buying transaction of a product from the product is bought in an online store through transportation from vendor to a consumer, the method comprising:
- providing one or more search results representative of products, and a description for each product, the description comprising product related information;
- identifying the consumer's delivery location,
- calculating a relative match value for each product in the search results, taking into account at least the consumer's delivery location,
- sorting the search results according to each product's relative match value
- receiving customer input selecting a product to buy,
- receiving customer input selecting a payment method for the transaction,
- initiating transportation of the selected product from the vendor to the consumer's delivery location,
receiving a delivery confirmation message when the product is delivered to the consumer's delivery location.

2. Method according to claim 1, where the location of the consumer is identified by means of WIFI-localization/Triangulation/GPS information, using location data from the customer's computer or smartphone, details from a consumer profile in the online store, or information received directly from the consumer.

3. Method according to claim 1, where calculating the relative match value for each product in the search result also takes into account price of the product and/or .

4. Method according to any of the previous claims, comprising receiving customer input selecting a transportation time significance factor and a price significance factor and calculating the relative match value taking into account the transportation time significance factor and the price significance factor.

5. Method according to any of the previous claims, comprising calculating the transportation distance from the vendor to the consumer delivery location and calculating the transport time from the vendor to the consumer delivery location based on the calculated distance.

6. Method according to any of the previous claims, comprising carrying out a payment transaction upon reception of the delivery confirmation message.

7. Method according to any of the claims 1-6, comprising checking if new customer input has been received selecting the payment method upon reception of the delivery confirmation message, and carrying out a payment transaction using the selected payment method.

8. Method according to any of the previous claims, where the payment method is one of: credit card, debit card, online payment service, cash on delivery.

9. Method according to any of the previous claims, comprising sending at least one message to the consumer.

10. Method according to claim 9, where the message comprises information on expected delivery time.
